# EUROPEAN PATENT SPECIFICATION

(11) **EP 1 557 343 B1**
(45) Date of publication and mention of the grant of the patent: **07.05.2008**
(21) Application number: 04106994.9
(22) Date of filing: 27.12.2004
(51) Int. Cl.: B62D 33/06

(54) **Split fold-away bed for a vehicle cabin, especially for the cabin of an industrial vehicle, and a vehicle cabin furnished with such bed**
Doppelte ausklappbare Liege für ein Fahrerhaus eines Lastkraftfahrzeuges, und Fahrerhaus eines Lastkraftfahrzeuges mit einer derartigen Liege
Lit composé repliable pour cabine de véhicule industriel, et cabine de véhicule industriel avec un lit pareil

(30) Priority: 23.01.2004 IT MI20040090
(43) Date of publication of application: 27.07.2005
(73) Proprietor: IVECO S.p.A., 10156 Torino (IT)
(72) Inventor: Ropolo, Bruno, 14010 San Paolo Solbrito (IT)
(74) Representative: Gervasi, Gemma

(56) References cited:
- EP-A- 1 270 381
- DE-A- 2 827 876
- GB-A- 1 410 440
- GB-A- 1 574 909
- US-A- 4 215 899

## Description

This invention relates to a split fold-away bed for a vehicle cabin, especially for the cabin of an industrial vehicle, and a vehicle cabin furnished with such bed.

Cabins of industrial vehicles, especially those of long-distance trucks, usually have a bed, placed behind the seats, so that the driver or passenger can rest inside the actual cabin.

Problems arise when designing such beds, due to the need to occupy as little space as possible in a place such as the driver's cab, where there is a limited amount of room available, without reducing the level of comfort. Such beds must occupy as little space as possible, especially when not in use, so that the space in the cabin can be used in the best possible way.

This is even more of a problem if the cabin must contain more than one bed, to allow more than one person to rest at the same time, e.g. the driver and the passenger, or two drivers who take turns to drive, for example during resting stops.

DE-A-2827876 discloses a bed for a vehicle cabin, divided into a front part and a rear part, with a folding mechanism whereby the bed can be placed in a first horizontal position in which the front and the rear part are placed side by side, and a second raised position in which the front and the rear part are folded. This solution however is not optimal especially for the support system for the bed.

This invention aims to overcome these drawbacks with a bed for a vehicle cabin, especially for use in an industrial vehicle, that, when not in use, can be folded up and tucked away at the back of the cabin, thus taking up very little room and increasing the amount of space available inside the cabin.

This invention refers to a bed for a vehicle cabin, especially for use in an industrial vehicle, as described in claim 1.

This invention refers in particular to a bed for a vehicle cabin, especially for use in an industrial vehicle, and a vehicle cabin furnished with such bed, as described more fully in the claims, which are an integral part of this description.

The purposes and advantages of this invention will become clear from the following detailed description of a preferred embodiment (and the relative alternative forms of embodiment) and the drawings that are attached hereto, which are merely illustrative and not limitative, of which:
figure 1 is a cross-sectional top view of a vehicle cabin furnished with a bed according to this invention;
figures 2a, 2b, 2c, 2d are, respectively, a top view, a side view, a front view and a perspective view of the frame of the split fold-away bed according to this invention;
figures 3a, 3b, 3c, 3d are, respectively, a top view, a side view, a front view and a perspective view of the split fold-away bed with padding;
figures 4a, 4b, 4c are cross-sectional side views of the cabin profile with the bed respectively in the horizontal unfolded position, in the horizontal folded position, in the folded and tucked away position.

In the drawings the same reference numbers and letters are used to identify the same elements.

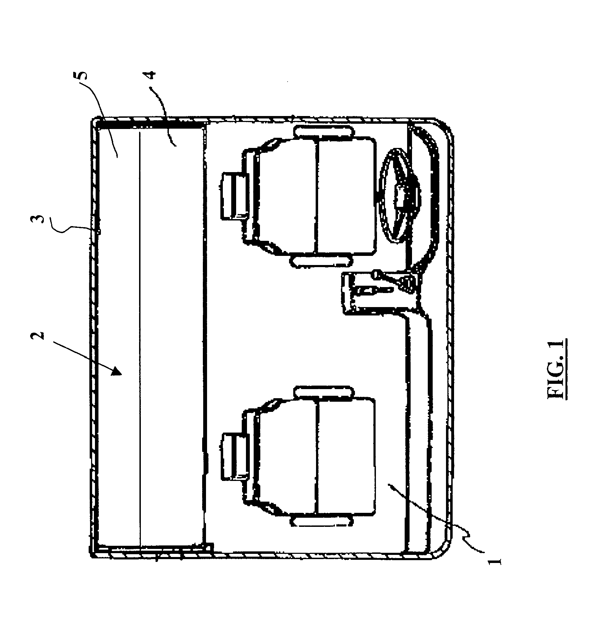

Fig.1 is a schematic drawing illustrating a cross-sectional top view of the cabin 1 equipped with a driving position and a passenger position with the relative seats, and a rear part that preferably houses the bed 2 according to this invention, which is placed close to the rear wall 3 of the cabin. The bed is split into two parts 4 and 5 that are placed side by side and parallel to the rear wall 3.

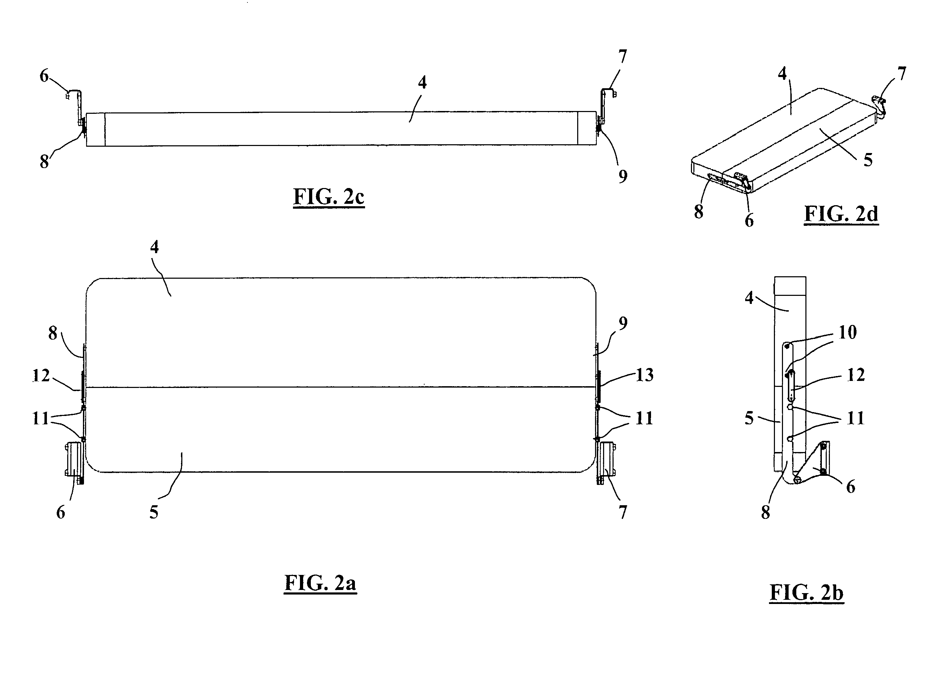

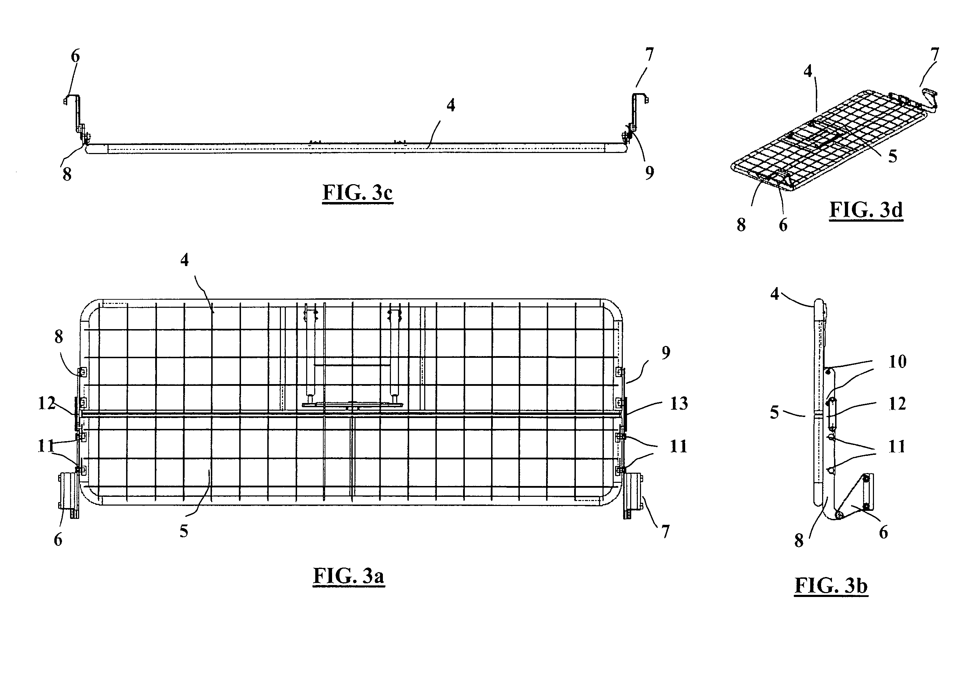

Figures 2a, 2b, 2c, 2d and figures 3a, 3b, 3c, 3d illustrate the various components of the bed 2.

The bed 2 consists of two parts, the front part 4 and the rear part 5, which are placed side by side lengthwise.

There are two metal supporting brackets 6 and 7. Such supporting brackets are fastened to the body of the cabin and have a pivoting point that constitutes the anchorage point of the respective folding metal arms 8 and 9.

The front part 4 of the bed is fastened to the folding arms 8 and 9, for example using screws or fixed pins 10, making it one with the arms.

The side walls of the frame of the rear part 5 of the bed are fitted with projecting pins 11 that fit into appropriate corresponding recesses in the arms 8 and 9 that house the pins 11 so that when in the horizontal position the rear part 5 is parallel to and in line with the front part 4.

There are also two brackets 12 and 13 connected at one end to the respective arm 8 and 9, and at the other end to the rear part 5 of the bed.

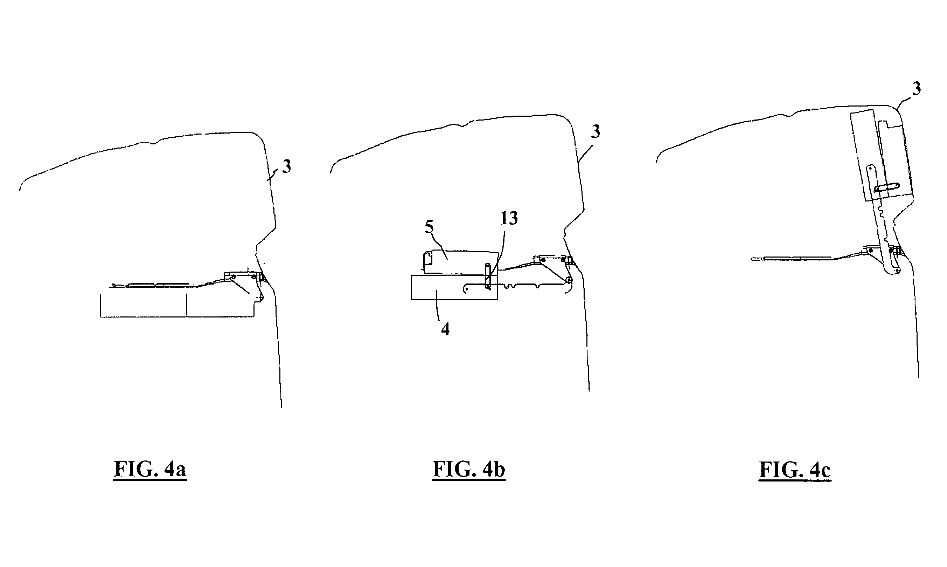

The function of the brackets 12 and 13 is explained more clearly in figures 4a, 4b, 4c, which illustrate how the bed can be folded according to this invention.

In fig. 4a the bed is in the lowered horizontal position ready for use, at a distance from the roof of the cabin 3 that is sufficient to allow a person to lie down comfortably. Furthermore, there is enough room under the bed, for example, for another bed or other elements not shown in the figure.

When in the horizontal position the bed may rest on additional anchor supports, not shown in the figures: for example, the projecting ends of the arms 8 and 9 may rest on L-brackets fastened to the side walls of the cabin.

Fig. 4b illustrates the bed in the horizontal position, but folded, i.e. with the rear part 5 folded over on top of the front part 4. Note the function of the brackets 12 and 13 (shown in the figure): these keep the front part and the rear part of the bed at the correct distance apart. If the two parts were joined by means of a simple pin coupling they would squash one another along the fold, which could eventually reduce the elasticity of the padding of the bed. The presence of the brackets 12 and 13 eliminates this inconvenience.

Fig. 4c illustrates the bed in the folded and raised position when not in use. Any method that is known may be used to secure the bed to the bodywork to prevent it from coming down. Note the small amount of space that is used with the bed in this position, which means that practically all the space inside the cabin is accessible and useable and, in particular, it is possible for a person to stand upright inside the cabin.

Furthermore, the upper rear part of the cabin 3 can be adapted to include a recess that can house the folded bed in the raised position, so that this takes up even less space.

Figures 2a, 2b, 2c, 2d illustrate the structure of the supporting frame of the bed more clearly. Such structure may be made of any known material provided that it is strong and reliable, for example metal or rigid plastic.

Figures 3a, 3b, 3c, 3d illustrate the final external configuration of the bed more clearly, with the two parts, the front part and the rear part, furnished with mattresses with ordinary padding of a type that is known.

It will be apparent to the person skilled in the art that other alternative and equivalent embodiments of the invention can be conceived and reduced to practice without departing from the true spirit of the invention.

For example, one possible embodiment consists of anchoring the rear part 5 of the bed to the arms 8 and 9 so that the front part 4 can be removed and folded away.

From the description set forth above it will be possible for the person skilled in the art to embody the invention without introducing any further construction details.

## Claims

1. Bed for a vehicle cabin, especially for use in an industrial vehicle, said bed being split lengthwise into two parts, a front part (4) and a rear part (5), and comprises a folding mechanism whereby the bed can be placed in a first horizontal position in which said front part (4) and said rear part (5) are substantially aligned and side by side, and a second raised position in which said front part (4) and said rear part (5) are folded one on top of the other, **characterized in that** said folding mechanism comprises two folding arms (8, 9) that are placed breadthwise across the bed and that said front part (4) is fastened to said arms and that said rear part (5) fits horizontally into said arms so that it can be removed, with one end of said arms pivoted to one side of said cabin.

2. Bed for a vehicle cabin according to claim 1, **characterized in that** said folding mechanism also comprises two brackets (12, 13) connected at one end to the respective arm (8, 9), and at the other end to said rear part (5) of the bed, so that in said second raised position said front part (4) and said rear part (5) are kept the correct distance apart so that they can be folded without squashing one another.

3. Bed for a vehicle cabin according to claim 1, **characterized in that** said folding mechanism also comprises two supporting brackets (6, 7) that are fastened to the cabin and have a pivoting point that constitutes the anchor and pivot point of said folding arms (8, 9).

4. Bed for a vehicle cabin according to claim 1, **characterized in that** the side walls of said rear part (5) are fitted with protruding pins (11) that fit into corresponding recesses in said two folding arms (8, 9), to guarantee said first horizontal position.

5. Bed for a vehicle cabin according to claim 1, **characterized in that** in said second raised position the bed is in the upper rear part of the cabin and that in said first horizontal position said front part (4) faces the inside of the cabin and said rear part (5) faces the rear wall of the cabin.

6. Bed for a vehicle cabin according to claim 1, **characterized in that** in said second raised position the bed is in the upper rear part of the cabin and that in said first horizontal position said rear part (5) faces the inside of the cabin and said front part (4) faces the rear wall of the cabin.

7. Vehicle cabin, especially the cabin of an industrial vehicle, equipped with a bed according to any of the previous claims.

8. Vehicle cabin according to claim 7, **characterized in that** the upper rear part thereof features a recess that is suitable for housing the folded bed in the raised position.

## Patentansprüche

1. Bett für eine Fahrzeugkabine, insbesondere zur Verwendung in einem gewerblichen Fahrzeug, wobei das Bett in Längsrichtung in zwei Teile unterteilt ist, einen Vorderteil (4) und einen Hinterteil (5), und einen Faltmechanismus umfasst, wodurch das Bett in einer ersten Horizontalposition, in der der Vorderteil (4) und der Hinterteil (5) nebeneinanderliegen und im Wesentlichen fluchten und einer zweiten ausgerichteten Position, in der der Vorderteil (4) und der Hinterteil (5) einer über den anderen gefaltetet sind, platzierbar ist, **dadurch gekennzeichnet, dass** der Faltmechanismus zwei Faltarme (8, 9) umfasst, die in Breitenrichtung über das Bett angeordnet sind und dass der Vorderteil (4) an den Armen befestigt ist und der Hinterteil (5) horizontal in die Arme passt, so dass er entferntbar ist, wenn ein Ende der Arme zu einer Seite der Kabine verschwenkt ist.

2. Bett für eine Fahrzeugkabine nach Anspruch 1, **dadurch gekennzeichnet, dass** der Faltmechanismus zwei Halterungen (12, 13) umfasst, die mit einem Ende des entsprechenden Arms und dem anderen Ende des Hinterteils (5) des Betts verbunden sind, so dass der Vorderteil (4) und der Hinterteil (5) in der zweiten aufgerichteten Position im richtigen Abstand voneinander entfernt gehalten werden, so dass sie ohne einander zu quetschen faltbar sind.

3. Bett für eine Fahrzeugkabine nach Anspruch 1, **dadurch gekennzeichnet, dass** der Faltmechanismus auch zwei befestigende Halterungen (6, 7) umfasst, die an der Kabine befestigt sind und einen Schwenkpunkt aufweisen, der die Verankerung und den Schwenkpunkt der Faltarme (8, 9) bildet.

4. Bett für eine Fahrzeugkabine nach Anspruch 1, **dadurch gekennzeichnet, dass** die Seitenwände des Hinterteils (5) mit vorragenden Stiften (11) versehen sind, die in entsprechende Vertiefungen in den zwei Faltarmen (8, 9) passen, um die erste horizontale Position zu garantieren.

5. Bett für eine Fahrzeugkabine nach Anspruch 1, **dadurch gekennzeichnet, dass** das Bett in der zweiten aufgerichteten Position in dem oberen hinteren Teil der Kabine liegt und dass in der ersten Horizontalposition der Vorderteil (4) der Innenseite der Kabine zugewandt ist und der Hinterteil (5) der Rückwand der Kabine zugewandt ist.

6. Bett für eine Fahrzeugkabine nach Anspruch 1, **dadurch gekennzeichnet, dass** das Bett in der zweiten aufgerichteten Position in dem oberen Teil der Kabine liegt und dass in der ersten Horizontalposition der Hinterteil (5) der Innenseite der Kabine zugewandt ist und der Vorderteil (4) der Rückwand der Kabine zugewandt ist.

7. Fahrzeugkabine, insbesondere Kabine eines gewerblichen Fahrzeugs, ausgestattet mit einem Bett nach einem der vorstehenden Ansprüche.

8. Fahrzeugkabine nach Anspruch 7, **dadurch gekennzeichnet, dass** der obere hintere Teil davon eine Vertiefung aufweist, die geeignet ist, um das gefaltete Bett in der aufgerichteten Position aufzunehmen.

## Revendications

1. Couchette destinée à une cabine de véhicule, spécialement destinée à être utilisée dans un véhicule industriel, ladite couchette étant séparée dans le sens de la longueur en deux parties, une partie avant (4) et une partie arrière (5), et comprenant un mécanisme d'escamotage grâce auquel la couchette peut être placée dans une première position horizontale dans laquelle ladite partie avant (4) et ladite partie arrière (5) sont sensiblement alignées et côte à côte, et dans une seconde position relevée dans laquelle ladite première partie (4) et ladite seconde partie (5) sont repliées l'une au dessus de l'autre, **caractérisée en ce que** ledit mécanisme d'escamotage comporte deux bras d'escamotage (8, 9) qui sont placés dans le sens de la largeur à travers toute la couchette, **en ce que** ladite partie avant (4) est fixée auxdits bras et **en ce que** ladite partie arrière (5) repose horizontalement à l'intérieur desdits bras de telle sorte qu'elle puisse être retirée, avec une extrémité desdits bras ayant pivoté vers un côté de ladite cabine.

2. Couchette destinée à une cabine de véhicule selon la revendication 1, **caractérisée en ce que** ledit mécanisme d'escamotage comprend également deux supports (12, 13) reliés par une extrémité au bras correspondant (8, 9), et par l'autre extrémité à ladite partie arrière (5) de la couchette, de telle sorte que dans ladite position relevée ladite partie avant (4) et ladite partie arrière (5) sont séparées par la distance correcte qui leur permet d'être repliées sans s'écraser l'une l'autre.

3. Couchette destinée à une cabine de véhicule selon la revendication 1, **caractérisée en ce que** ledit mécanisme d'escamotage comprend également deux équerres de support (6, 7) lesquelles sont fixées à la cabine et présentent un point de pivotement qui constitue l'ancrage et le pivot desdits bras d'escamotage (8, 9).

4. Couchette destinée à une cabine de véhicule selon la revendication 1, **caractérisée en ce que** les parois latérales de ladite partie arrière (5) sont munies de broches faisant saillie (11) lesquelles s'ajustent à l'intérieur de creux correspondants sur lesdits bras d'escamotage (8, 9), de façon à assurer ladite première position horizontale.

5. Couchette destinée à une cabine de véhicule selon la revendication 1, **caractérisée en ce que** dans ladite seconde position relevée la couchette est dans la partie supérieure arrière de la cabine et **en ce que** dans ladite première position horizontale ladite partie avant (4) est tournée vers l'intérieur de la cabine et ladite partie arrière (5) est tournée vers la paroi arrière de la cabine.

6. Couchette destinée à une cabine de véhicule selon la revendication 1, **caractérisée en ce que** dans ladite seconde position relevée la couchette est dans la partie supérieure arrière de la cabine et **en ce que** dans ladite première position horizontale ladite partie arrière (5) est tournée vers l'intérieur de la cabine et ladite partie avant (4) est tournée vers la paroi arrière de la cabine.

7. Cabine de véhicule, spécialement cabine de véhicule industriel, équipée d'une couchette selon l'une quelconque des revendications précédentes.

8. Cabine de véhicule selon la revendication 7, **caractérisée en ce que** la partie supérieure arrière de celle-ci comporte un retrait qui est adapté pour loger la couchette repliée dans la position relevée.
